# EUROPÄISCHE PATENTSCHRIFT

(11) **EP 1 338 458 B1**
(45) Veröffentlichungstag und Bekanntmachung des Hinweises auf die Patenterteilung: **25.10.2006**
(21) Anmeldenummer: 03003906.9
(22) Anmeldetag: 21.02.2003
(51) Int. Cl.: B60K 17/28

(54) **Vorrichtung zum Übertragen von Antriebskraft von einer Antriebswelle auf eine Zapfwelle**
Device for transmitting power from a drive shaft to a power-take-off shaft
Dispositif de transmission de force d'un arbre d'entraînement à un arbre de prise de force

(30) Priorität: 25.02.2002 US 82390
(43) Veröffentlichungstag der Anmeldung: 27.08.2003
(73) Patentinhaber: DEERE & COMPANY, Moline, Illinois 61265-8098 (US)
(72) Erfinder: Rodeghiero, Rene, Antonio, Hudson, IA 50642 (US); Stettler, Werner, Cedar Falls, IA 50613 (US); Thompson, Graham, Waterloo, IA 50701 (US); Klabunde, Barbara, Waterloo, IA 50701 (US); Skotnikov, Andrey, Valeryevich, Cedar Falls, IA 50613 (US)
(74) Vertreter: Lau-Loskill, Philipp

(56) Entgegenhaltungen:
- EP-A- 1 072 817
- WO-A-94/07056
- DE-A- 4 024 063
- DE-A- 19 811 691
- SU-A- 1 142 315
- US-A- 4 191 270
- US-A- 6 138 069
- US-A- 6 145 455

## Beschreibung

Die Erfindung betrifft eine Vorrichtung zum Übertragen von Antriebskraft von einer mit einem Verbrennungsmotor angetriebenen Antriebswelle auf eine Zapfwelle.

Beim Betrieb eines landwirtschaftlich genutzten Traktors unter Bedingungen geringer Last ist es üblich, einen hohen Gang einzulegen und Gas wegzunehmen, um den Treibstoffverbrauch und den vom Traktor erzeugten Lärm zu reduzieren. Bei modernen Traktoren mit elektronischer Steuerung und Power-Shift-Getrieben oder stufenlosen Getrieben erfolgt das Einlegen eines hohen Gangs und das Gas-Wegnehmen computergesteuert, um ein optimiertes Fahrverhalten und eine volle Funktionsfähigkeit sicherzustellen. Jedoch kann zum Erzielen eines optimierten Benzinverbrauchs bei einem Zapfwellenbetrieb des Traktors das Gas nicht weggenommen werden, da die meisten von einer Zapfwelle angetriebenen Arbeitsgeräte zur Sicherung eines ordnungsgemäßen Betriebs eine konstante Eingangsdrehzahl erfordern.

Eine Vorrichtung zum Übertragen von Antriebskraft von einer Antriebswelle auf eine Zapfwelle gemäß dem Oberbegriff des Anspruchs 1 ist aus der SU-A-1 142 315 bekannt.

Aus der US 5,669,842 ist ein Hybrid-Getriebesystem bekannt, bei dem Zapfwellen (PTO = Power Take Off) alternativ von einem Verbrennungsmotor oder von elektrischen Motoren bzw. Generatoren angetrieben werden. Mit diesem Hybrid-Getriebesystem können die Zapfwellen von den elektrischen Motoren bzw. Generatoren unabhängig vom Verbrennungsmotor betrieben werden, wenn die dort vorgesehene Kupplung ausgerückt ist. Da der Verbrennungsmotor über Kupplungen und Getriebe direkt mit den Zapfwellen verbunden ist, ändert sich bei eingerückter Kupplung die Drehzahl der die Zapfwellen antreibenden Antriebswellen mit einer Änderung der Drehzahl des Verbrennungsmotors. Daher kann die Zapfwelle nicht unabhängig von der Verbrennungsmotordrehzahl mit einer konstanten Drehzahl drehen.

Einige zapfwellenangetriebene landwirtschaftliche Arbeitsgeräte weisen eine wegabhängige Dosiereinrichtung auf, beispielsweise Drillmaschinen, Pflanzmaschinen, Kartoffelpflanzmaschinen, Dünger-Anwendungsmaschinen, Düngerverteilermaschinen und Zerstäuber. Solche Arbeitsgeräte benötigen eine Zapfwellendrehzahl, die proportional zur Fahrtgeschwindigkeit ist. Wenn nun die Traktorräder durchdrehen, verringert sich die Fahrtgeschwindigkeit. Falls die Zapfwellendrehzahl dabei unverändert bleibt, verändert sich die Proportionalität der Zapfwellendrehzahl zur Fahrtgeschwindigkeit, und die Drehzahl der wegabhängigen Dosiereinrichtung wird sich relativ zur Fahrtgeschwindigkeit erhöhen. Beim Kartoffelanpflanzen kann dies bewirken, dass die Kartoffeln auf den Boden abgegeben und unregelmäßig angepflanzt werden.

Die der Erfindung zugrunde liegende Aufgabe wird darin gesehen, eine Vorrichtung zum Übertragen von Antriebskraft von einer Antriebswelle auf eine Zapfwelle der eingangs genannten Art anzugeben, durch die die vorgenannten Probleme überwunden werden. Insbesondere soll eine Vorrichtung angegeben und weitergebildet werden, die unabhängig von Drehzahländerungen des Verbrennungsmotors einen Zapfwellenbetrieb mit einer im Wesentlichen konstanten Drehzahl ermöglicht. Weiterhin soll die Vorrichtung in der Lage sein, einen Zapfwellenbetrieb mit einer Zapfwellendrehzahl zu ermöglichen, die einen vorgebbaren Verhältniswert zur Fahrtgeschwindigkeit aufweist.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Die erfindungsgemäße Vorrichtung zum Übertragen von Antriebskraft von einer von einem Verbrennungsmotor antreibbaren Antriebswelle auf eine Zapfwelle umfasst ein Getriebe und eine mit variabler Drehzahl betreibbaren Antriebsvorrichtung, wobei das Getriebe eine erste und eine zweite Eingangsschnittstelle und eine Ausgangsschnittstelle aufweist, wobei die erste Eingangsschnittstelle mit der Antriebswelle verbunden ist, wobei die Ausgangsschnittstelle mit der Zapfwelle verbunden ist, wobei die Ausgangsschnittstelle eine Drehzahl aufweist, die von den Drehzahlen der ersten und der zweiten Eingangsschnittstelle abhängt, und wobei die Antriebsvorrichtung mit der zweiten Eingangsschnittstelle verbunden ist.

Erfindungsgemäß ist erkannt worden, dass ein Teil der Antriebskraft von der von einem Verbrennungsmotor antreibbaren Antriebswelle über die Antriebsvorrichtung auf die zweite Eingangsschnittstelle des Getriebes übertragen werden kann, so dass das Getriebe die direkt von der Antriebswelle kommende Antriebskraft in einem konstanten Verhältnis mit der über die zweite Eingangsschnittstelle des Getriebes kommende drehzahlvariablen Antriebskraft summiert. Somit kann in Abhängigkeit von der Ansteuerung der Antriebsvorrichtung die Ausgangsdrehzahl der Zapfwelle einerseits mit konstanter Drehzahl und andererseits mit einer vorgebbaren Drehzahlabhängigkeit eingestellt werden. Hierdurch kann beispielsweise die Drehzahl der Zapfwelle in ganz besonders vorteilhafter Weise konstant gehalten werden, obwohl die Drehzahl der Antriebswelle variiert. Andererseits ist es auch möglich, die Zapfwellendrehzahl mit der Fahrtgeschwindigkeit des Fahrzeugs zu variieren. Hierzu ist eine entsprechende Ansteuerung der Antriebsvorrichtung vorausgesetzt.

Die Ansteuerung der Antriebsvorrichtung ist dadurch realisiert, dass eine Steuereinheit vorgesehen ist, die mit der Antriebsvorrichtung in Wirkverbindung steht. Diese Steuereinheit erzeugt Steuersignale, die die Drehzahl der Antriebsvorrichtung derart variiert, dass die Drehzahl der Ausgangsschnittstelle trotz Drehzahlvariationen der Antriebswelle im Wesentlichen konstant ist. Insoweit können in vorteilhafter Weise zapfwellenangetriebene Arbeitsgeräte betrieben werden, die eine konstante Eingangsdrehzahl erfordern, wobei beispielsweise ein Verbrennungsmotor eines Traktors nicht mit einer konstant vorgegebenen Drehzahl betrieben werden muss.

Zur Erfassung der Drehzahl eines die Antriebswelle antreibenden Verbrennungsmotors ist ein Drehzahlsensor vorgesehen, der die Drehzahl der ersten Eingangsschnittstelle misst und ein Drehzahlsignal der Steuereinheit zur Verfügung stellt.

Vorzugsweise könnte die Antriebsvorrichtung eine mit der ersten Eingangsschnittstelle antreibend verbundene Hydraulikpumpe und einen von der Hydraulikpumpe angetriebenen und mit der zweiten Eingangsschnittstelle des Getriebes verbundenen Hydraulikmotor aufweisen. Somit wäre ein Teil der Kraftübertragung mit Hilfe der Antriebsvorrichtung auf hydraulischem Weg realisiert. Hierbei ist vorzugsweise das Getriebe derart auszulegen, dass die von der hydraulischen Antriebsvorrichtung zu übertragenden Antriebskräfte in einem Bereich liegen, in dem die Antriebsvorrichtung einen hohen oder zumindest günstigen Wirkungsgrad aufweist. Beispielsweise könnte die Hydraulikpumpe eine Verstellpumpe und der Hydraulikmotor einen Konstantmotor aufweisen.

In einer bevorzugten Ausführungsform weist das Getriebe einen Planetenradträger, Planetenzahnräder, ein Hohlrad und ein Sonnenzahnrad auf. Der Planetenradträger ist zur Drehung mit der Abtriebswelle verbunden, die Planetenzahnräder sind drehbar auf dem Planetenradträger angeordnet und das Hohlrad ist zur Drehung mit der Ausgangsschnittstelle befestigt. Das Hohlrad steht mit den Planetenzahnrädern in eingreifender Verbindung und das Sonnenzahnrad steht mit den Planetenzahnrädern in eingreifender Verbindung und ist antreibend mit der Antriebsvorrichtung verbunden.

Bei der Erfindung sind ein ein Fahrtgeschwindigkeitssignal erzeugender Fahrtgeschwindigkeitssensor, eine bedienergesteuerte und ein Verhältniswertsignal erzeugende Verhältniswert-Steuereinheit und eine Steuereinheit vorgesehen. Die Steuereinheit ist mit der Antriebsvorrichtung wirkverbunden. Die Steuereinheit empfängt das Fahrtgeschwindigkeitssignal und das Verhältniswertsignal und erzeugt Steuersignale, die die Drehzahl der Antriebsvorrichtung derart variiert, dass ein vorgebbarer Verhältniswert zwischen einer Fahrtgeschwindigkeit und der Drehzahl der Ausgangsschnittstelle aufrechterhalten wird. Hierdurch kann in besonders vorteilhafter Weise beispielsweise eine "Wegzapfwelle" realisiert werden, bei der die Drehzahl der Zapfwelle proportional zur Fahrtgeschwindigkeit eines Traktors gesteuert wird.

In einer weiteren bevorzugten Ausführungsform kann eine konstante Drehzahl der Zapfwelle dadurch erreicht werden, dass die erfindungsgemäße Vorrichtung eine ein vorgegebenes Drehzahlsignal erzeugende bedienergesteuerte Drehzahlsteuereinheit, ein ein Drehzahlsignal der Ausgangsschnittstelle erzeugender Drehzahlsensor der Ausgangsschnittstelle und eine Steuereinheit aufweist. Die Steuereinheit ist hierbei mit der Antriebsvorrichtung wirkverbunden und empfängt das vorgegebene Drehzahlsignal und das Drehzahlsignal der Ausgangsschnittstelle. Die Steuereinheit erzeugt Steuersignale, die die Drehzahl der Antriebsvorrichtung derart variiert, dass die Drehzahl der Ausgangsschnittstelle bei einer vorgegebenen Drehzahl aufrechterhalten wird.

In einer bevorzugten Ausführungsform ist ein ein Drehzahlsignal des Planetenradträgers erzeugender Drehzahlsensor, eine Steuereinheit und eine mit variabler Drehzahl betreibbare Antriebsvorrichtung vorgesehen. Die Steuereinheit empfängt das Drehzahlsignal und erzeugt ein davon abhängiges Steuersignal. Die Antriebsvorrichtung empfängt das Steuersignal und ist antreibend mit dem Sonnenzahnrad verbunden. Die Steuereinheit und die Antriebsvorrichtung arbeiten derart zusammen, dass die Zapfwelle trotz Drehzahlvariationen der Antriebswelle mit einer im Wesentlichen unveränderten Drehzahl dreht. Insoweit können auch mit dieser Ausführungsform in vorteilhafter Weise zapfwellenangetriebene Arbeitsgeräte betrieben werden, die eine konstante Eingangsdrehzahl erfordern, wobei beispielsweise ein Verbrennungsmotor eines Traktors nicht mit einer konstant vorgegebenen Drehzahl betrieben werden muss.

Die Antriebsvorrichtung umfasst eine Antriebseinheit, die eine Hydraulikpumpe umfasst, die mit der ersten Eingangsschnittstelle des Getriebes antreibend verbunden ist. Weiterhin umfasst die Antriebseinheit einen Hydraulikmotor, der mit der zweiten Eingangsschnittstelle des Getriebes verbunden ist.

Vorzugsweise kann ein mit variabler Drehzahl betreibbar und eine Antriebswelle aufweisender Antriebsmotor und ein Antriebsrad vorgesehen sein, wobei das Antriebsrad zur Drehung mit der Antriebswelle des Antriebsmotors verbunden ist und in eingreifender Verbindung mit dem Sonnenzahnrad steht.

Weiterhin kann ein erstes zur Drehung mit dem Planetenradträger verbundenes Antriebsrad, eine Verstellpumpe, ein mit variabler Drehzahl betreibbarer und von der Verstellpumpe angetriebener Konstant-Hydraulikmotor und ein in eingreifender Verbindung mit dem Sonnenzahnrad stehendes und zur Drehung mit der Antriebswelle des Motors befestigtes zweites Antriebsrad vorgesehen sein.

Gemäß einer besonders bevorzugten Ausführungsform umfasst ein Zapfwellengetriebe eine leistungsverzweigte Getriebeeinheit mit einem mit einer Zapfwelle verbundenen Ausgang, einen mit einer Antriebswelle eines Motors verbundenen ersten Eingang und einen mit dem Ausgang einer Antriebsvorrichtung verbundenen zweiten Eingang, wobei die Antriebsvorrichtung mit einem variablen Verhältniswert oder mit einer variablen Drehzahl betreibbar ist. Eine Steuereinheit steuert die Drehzahl der Antriebsvorrichtung in Abhängigkeit der detektierten Drehzahl des Motors, um die Zapfwellendrehzahl konstant zu halten. Die leistungsverzweigte Getriebeeinheit umfasst vorzugsweise eine Planetengetriebeeinheit. Die Antriebsvorrichtung umfasst vorzugsweise eine hydraulisch betreibbare Verstellpumpe, die einen Konstant-Hydraulikmotor antreibt, der wiederum ein Sonnenzahnrad der Planetengetriebeeinheit antreibt. Diese Vorrichtung überträgt Antriebskraft sowohl von dem Motor als auch von der Antriebsvorrichtung zur Zapfwelle. Wenn eine konstante Zapfwellendrehzahl aufrechterhalten wird, können zapfwellenangetriebene Geräte, wie beispielsweise Gras/Heu-Verteiler, optimal betrieben werden. Diese Vorrichtung erhöht weiterhin die Wirtschaftlichkeit des Treibstoffverbrauchs und reduziert den vom Bediener oder von anderen in der näheren Umgebung wahrgenommenen Lärm, da durch die Vorrichtung die Drehzahl des Motors reduzierbar ist. Darüber hinaus kann der hydraulische Fluss von der Verstellpumpe auch dann aufrechterhalten werden, wenn der Motor unterhalb seiner normalen Drehzahl läuft, wenn der die Zapfwelle antreibende Antriebsstrang auch die hydraulische Verstellpumpe antreibt.

Die Steuereinheit kann die Drehzahl der Antriebsvorrichtung auch als Funktion der detektierten Fahrtgeschwindigkeit, der detektierten Ausgangsdrehzahl, einem vom Bediener vorgebbaren Drehzahlsignalwert und/oder einem vom Bediener vorgebbaren Verhältniswert zwischen Fahrtgeschwindigkeit und Zapfwellendrehzahl steuern, um eine von einem Bediener festgesetzte vorgegebene Zapfwellendrehzahl oder einen von einem Bediener festgesetzten vorgegebenen Verhältniswert zwischen Fahrtgeschwindigkeit und Zapfwellendrehzahl aufrechtzuerhalten. Im Ergebnis kann die Zapfwellendrehzahl gesteuert werden, um ein optimiertes Leistungsverhalten des Arbeitsgeräts zu erzielen, ohne von den Variationen der Traktorgeschwindigkeit oder der Motordrehzahl beeinflusst zu werden.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine schematische Darstellung eines Getriebes und
- Fig. 2: eine schematische Darstellung eines Ausführungsbeispiels.

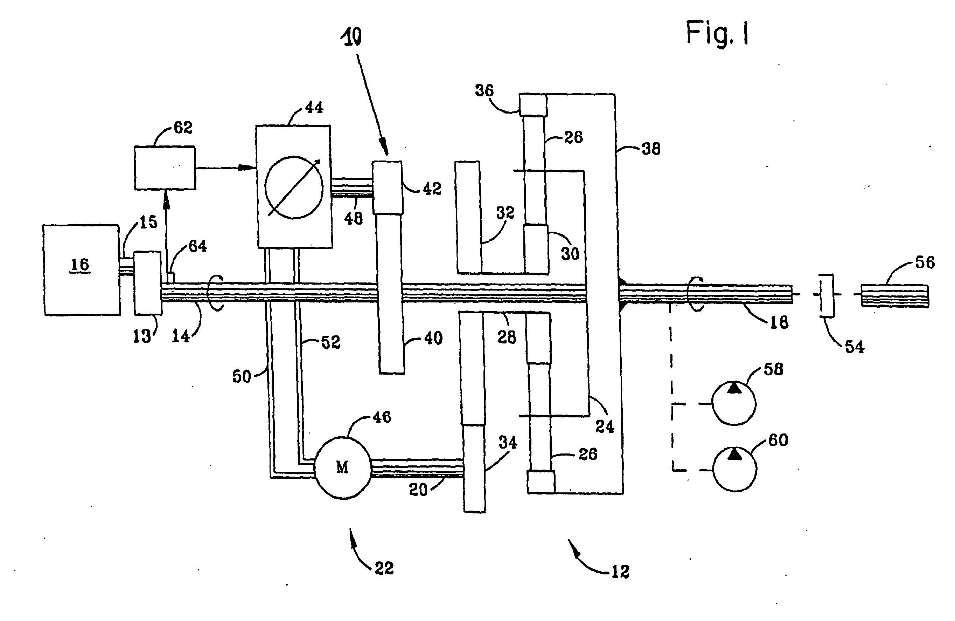

Fig. 1 zeigt ein Zapfwellengetriebe 10, das ein leistungsverzweigtes Getriebe oder ein summierendes Planetengetriebe 12 aufweist, das eine Haupteingangswelle 14 aufweist, die über eine konventionelle drehzahlvermindernde Getriebeeinheit 13 an eine Abtriebswelle 15 eines Motors 16 gekoppelt ist. Der Motor 16 ist vorzugsweise in Form eines Verbrennungsmotors ausgeführt. Das leistungsverzweigte Getriebe oder das summierende Planetengetriebe 12 ist an eine Ausgangswelle 18 und über eine Eingangswelle 20 an eine mit variabler Drehzahl betreibbaren Antriebsvorrichtung 22 gekoppelt.

Das leistungsverzweigte Getriebe oder das summierende Planetengetriebe 12 umfasst einen Planetenradträger 24, der am Ende der Haupteingangswelle 14 angebracht ist. Planetenzahnräder 26 sind drehbar auf dem Planetenradträger 24 angeordnet. Eine hohle Sonnenwelle 28 ist drehbar auf der Eingangswelle 14 montiert und nimmt diese auf. Ein erstes kleineres Sonnenzahnrad 30 ist an einem Ende der Sonnenwelle 28 drehfest befestigt und steht in eingreifender Verbindung mit den Planetenzahnrädern 26. Ein größeres zweites Eingangs-Sonnenzahnrad 32 ist an dem anderen Ende der Sonnenwelle 28 drehfest befestigt und steht in eingreifender Verbindung mit einem Eingangszahnrad 34. Ein Hohlrad 36 umgibt und steht in eingreifender Verbindung mit den Planetenzahnrädern 26. Ein Ringelement 38 verbindet drehfest das Hohlrad 36 mit der Ausgangswelle 18. Ein größeres Antriebsrad 40 ist drehfest auf der Eingangswelle 14 zwischen dem Motor 16 und der Sonnenwelle 28 angeordnet. Ein kleineres Antriebsrad 42 steht in eingreifender Verbindung mit dem Antriebsrad 40.

Die Antriebsvorrichtung 22 umfasst eine stufenlos variabel betreibbare hydrostatische Einheit mit einer Hydraulik-Verstellpumpe 44 und einem als Konstantmotor ausgeführten Hydraulikmotor 46. Die Hydraulik-Verstellpumpe 44 wird von dem Antriebsrad 42 über die Antriebswelle 48 angetrieben und ist mit dem Hydraulikmotor 46 über die Hydraulikleitungen 50 und 52 verbunden. Der Hydraulikmotor 46 treibt die Eingangswelle 20 an. Die Antriebsvorrichtung 22 kann in Form einer integralen hydrostatischen Einheit oder getrennt in Hydraulikpumpe und Hydraulikmotor ausgeführt sein, wobei im letzteren Fall die Hydraulikpumpe und der Hydraulikmotor über Hydraulikleitungen verbunden ist.

Die Ausgangswelle 18 ist vorzugsweise über eine Zapfwellenkupplung 54 mit einer Zapfwelle 56 verbunden, und kann auch antreibend mit einer Hydraulikpumpe 58, die Hydraulikflüssigkeit an ein - nicht gezeigtes - Hydrauliksystem eines Arbeitsgeräts liefert, und einer Hydraulikpumpe 60 für eine - nicht gezeigte - Servolenkung des Traktors verbunden sein.

Die drehzahlverringernde Getriebeeinheit 13 dreht die Welle 14 im Uhrzeigersinn - von der Hinterseite gesehen, d.h. von der rechten Seite der Figur - mit einer Drehzahl von 1000 Umdrehungen pro Minute, wenn der Motor vorzugsweise mit einer Drehzahl von 2200 Umdrehungen pro Minute läuft. In einem bevorzugten Ausführungsbeispiel umfassen die Planetenzahnräder 26 jeweils 39 Zähne, das Sonnenzahnrad 30 enthält 24 Zähne, das Sonnenzahnrad 32 enthält 88 Zähne, das Eingangszahnrad 34 enthält 22 Zähne, das Hohlrad 36 enthält 102 Zähne, das Antriebsrad 40 enthält 60 Zähne und das Antriebsrad 42 enthält 15 Zähne. Im Ergebnis wird die Hydraulikpumpe mit einer Drehzahl betrieben, die immer ein festgelegtes Vielfaches der Drehzahl der Welle 14 aufweist, in diesem Ausführungsbeispiel das Vierfache.

Eine Steuereinheit 62 empfängt ein Drehzahlsignal des Motors vom Drehzahlwellensensor 64 und erzeugt ein Steuersignal, das der Hydraulikpumpe 44 zur Verfügung gestellt wird, um hierdurch ihren Verstellwert einzustellen. Die Steuereinheit 62 ist zum Einstellen des Verstellwerts der Hydraulikpumpe 44 vorzugsweise derart ausgebildet, dass die Drehzahl des Hydraulikmotors 46 linear zwischen minus 4000 Umdrehungen pro Minute - wenn der Motor mit Nenndrehzahl läuft - und plus 2630 Umdrehungen pro Minute - wenn der Motor mit einer Drehzahl von 1505 Umdrehungen pro Minute läuft - variiert. Die Drehzahl des Hydraulikmotors 46 verläuft durch Null Umdrehungen pro Minute, wenn die Drehzahl des Motors den Drehzahlbereich zwischen 1793 und 1779 Umdrehungen pro Minute durchläuft. Im Ergebnis verbleibt die Drehzahl des Hohlzahnrads 36 und der Ausgangswelle 18 im Wesentlichen bei 1000 Umdrehungen pro Minute, obwohl beispielsweise die Drehzahl des Motors von 2200 Umdrehungen pro Minute zu einer geringeren Drehzahl von 1505 Umdrehungen pro Minute variiert. Die Hydraulikpumpen 58 und 60 können ebenfalls bei einer konstanten Drehzahl betrieben werden, so dass der an ein Arbeitsgerät oder andere hydraulische Komponenten abgegebene Hydraulikfluss aufrechterhalten werden kann, und zwar auch dann, wenn der Motor mit einer geringeren als der normalen Drehzahl läuft.

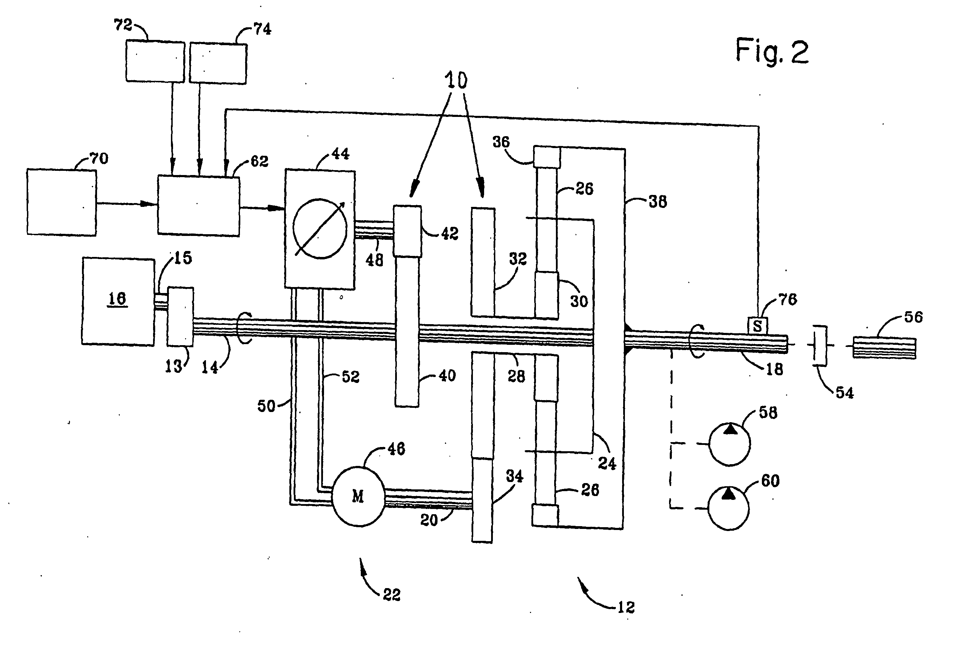

In Fig. 2 ist ein Ausführungsbeispiel gezeigt, in dem die Steuereinheit 62 ein Fahrtgeschwindigkeitssignal von einem Fahrtgeschwindigkeitssensor 70 empfängt, der beispielsweise in Form einer herkömmlichen Fahrtgeschwindigkeitsradaranlage ausgeführt sein kann. Die Steuereinheit 62 empfängt auch ein Verhältniswertsignal einer Verhältniswert-Steuereinheit 72 und könnte ein Fahrtgeschwindigkeitssignal oder ein Drehzahlsignal einer Drehzahlsteuereinheit 74 empfangen. Die Verhältniswert-Steuereinheit 72 könnte beispielsweise in Form eines bedienergesteuerten und in der - nicht gezeigten - Bedienerkonsole eines Fahrzeugs angeordneten Signalgebers ausgeführt sein.

Die Steuereinheit 62 wird auch mit der Buchstabenfolge ECU bezeichnet und ist eine Abkürzung für den Begriff Electronic Control Unit.

Die Steuereinheit bzw. die ECU 62 empfängt auch von einem Drehzahlsensor 76 ein Drehzahlsignal der Ausgangswelle. Die ECU ist zur Steuerung des Verstellwerts der Hydraulikpumpe 44 derart programmiert, dass die Drehzahl der Ausgangswelle 18 bei einem vorgebbaren Verhältniswert bezogen auf die Fahrtgeschwindigkeit aufrechterhalten wird, wobei der Verhältniswert von einer Verhältniswert-Steuereinheit 72 festlegbar ist. Die Steuereinheit bzw. die ECU 62 kann zur Steuerung des Verstellwerts der Hydraulikpumpe 44 auch derart programmiert sein, dass die Drehzahl der Ausgangswelle 18 bei einer konstanten Drehzahl, die von der Drehzahlsteuereinheit 74 festlegbar ist, und unter Verwendung eines von einem Drehzahlsensor 76 zur Verfügung gestellten Rückkopplungssignals aufrechterhalten wird.

Hierbei handelt es sich um ein effizientes System, da der größte Teil der Antriebskraft des Motors über das geringe Reibungsverluste aufweisende Planetengetriebe 12 zur Ausgangswelle übertragen wird. Lediglich ungefähr 25% der Antriebskraft wird maximal über die höhere Verluste aufweisende hydrostatisch arbeitende Antriebsvorrichtung 22 übertragen.

## Patentansprüche

1. Vorrichtung zum Übertragen von Antriebskraft von einer von einem Verbrennungsmotor antreibbaren Antriebswelle (15) auf eine Zapfwelle (56) für einen Traktor, mit einem Getriebe (10) und einer mit variabler Drehzahl betreibbaren Antriebsvorrichtung (22), wobei das Getriebe (10) eine erste und eine zweite Eingangsschnittstelle (14, 20) und eine Ausgangsschnittstelle (18) aufweist, wobei die erste Eingangsschnittstelle (14) mit der Antriebswelle (15) verbunden ist, wobei die Ausgangsschnittstelle (18) mit der Zapfwelle (56) verbunden ist, wobei die Ausgangsschnittstelle (18) eine Drehzahl aufweist, die von den Drehzahlen der ersten und der zweiten Eingangsschnittstelle (14, 20) abhängt, wobei die Antriebsvorrichtung (22) mit der zweiten Eingangsschnittstelle (20) verbunden ist, **dadurch gekennzeichnet, dass** ein ein Fahrtgeschwindigkeitssignal erzeugender Fahrtgeschwindigkeitssensor (70), eine bedienergesteuerte und ein Verhältniswertsignal erzeugende Verhältniswert-Steuereinheit (72) und eine Steuereinheit (62) vorgesehen ist, wobei die Steuereinheit (62) mit der Antriebsvorrichtung (22) wirkverbunden ist und die Steuereinheit (62) das Fahrtgeschwindigkeitssignal und das Verhältniswertsignal empfängt, und wobei die Steuereinheit (62) Steuersignale erzeugt, die die Drehzahl der Antriebsvorrichtung (22) derart variiert, dass ein vorgebbarer Verhältniswert zwischen einer Fahrtgeschwindigkeit und der Drehzahl der Ausgangsschnittstelle (18) aufrechterhalten wird.

2. Vorrichtung nach Anspruch 1, **dadurch gekennzeichnet, dass** eine Steuereinheit (62) mit der Antriebsvorrichtung (22) in Wirkverbindung steht, dass die Steuereinheit (62) derart angesteuert wird, dass die Steuereinheit (62) Steuersignale erzeugt, die die Drehzahl der Antriebsvorrichtung (22) derart variiert, dass die Drehzahl der Ausgangsschnittstelle (18) trotz Drehzahlvariationen der Antriebswelle (15) im Wesentlichen konstant ist.

3. Vorrichtung nach Anspruch 1 oder 2, **dadurch gekennzeichnet, dass** ein Drehzahlsensor (64) vorgesehen ist, der die Drehzahl der ersten Eingangsschnittstelle (14) misst und ein Drehzahlsignal der Steuereinheit (20) zur Verfügung stellt.

4. Vorrichtung nach einem der vorhergehenden Ansprüche, **dadurch gekennzeichnet, dass** die Antriebsvorrichtung (22) eine mit der ersten Eingangsschnittstelle (14) antreibend verbundene Hydraulikpumpe (44) und einen von der Hydraulikpumpe (44) angetriebenen und mit der zweiten Eingangsschnittstelle (20) des Getriebes (10) verbundenen Hydraulikmotor (46) aufweist.

5. Vorrichtung nach Anspruch 4, **dadurch gekennzeichnet, dass** die Hydraulikpumpe (44) eine Verstellpumpe und der Hydraulikmotor (46) einen Konstantmotor aufweist.

6. Vorrichtung nach einem der vorhergehenden Ansprüche, **dadurch gekennzeichnet, dass** das Getriebe (10) einen Planetenradträger (24), Planetenzahnräder (26), ein Hohlrad (36) und ein Sonnenzahnrad (30) aufweist, wobei der Planetenradträger (24) zur Drehung mit der Antriebswelle (15) verbunden ist, wobei die Planetenzahnräder (26) drehbar auf dem Planetenradträger (24) angeordnet sind, wobei das Hohlrad (36) zur Drehung mit der Ausgangsschnittstelle (18) befestigt ist, wobei das Hohlrad (36) mit den Planetenzahnrädern (26) in eingreifender Verbindung steht und wobei das Sonnenzahnrad (30) mit den Planetenzahnrädern (26) in eingreifender Verbindung steht und antreibend mit der Antriebsvorrichtung (22) verbunden ist.

7. Vorrichtung nach einem der vorhergehenden Ansprüche, **dadurch gekennzeichnet, dass** eine ein vorgegebenes Drehzahlsignal erzeugende bedienergesteuerte Drehzahlsteuereinheit (74), ein ein Drehzahlsignal der Ausgangsschnittstelle (18) erzeugender Drehzahlsensor (76) der Ausgangsschnittstelle (18) und eine Steuereinheit (62) vorgesehen ist, wobei die Steuereinheit (62) mit der Antriebsvorrichtung (22) wirkverbunden ist, wobei die Steuereinheit (62) das vorgegebene Drehzahlsignal und das Drehzahlsignal der Ausgangsschnittstelle (18) empfängt, und wobei die Steuereinheit (62) derart angesteuert wird, dass die Steuereinheit (62) Steuersignale erzeugt, die die Drehzahl der Antriebsvorrichtung (22) derart variiert, dass die Drehzahl der Ausgangsschnittstelle (18) bei einer vorgegebenen Drehzahl aufrechterhalten wird.

8. Vorrichtung nach Anspruch 6 oder 7, **dadurch gekennzeichnet, dass** ein ein Drehzahlsignal des Planetenradträgers (24) erzeugender Drehzahlsensor, eine Steuereinheit (62) und eine mit variabler Drehzahl betreibbaren Antriebsvorrichtung (22) vorgesehen ist, wobei die Steuereinheit (62) derart angesteuert wird, dass die Steuereinheit (62) das Drehzahlsignal empfängt und ein davon abhängiges Steuersignal erzeugt, wobei die Antriebsvorrichtung (22) das Steuersignal empfängt und antreibend mit dem Sonnenzahnrad (32) verbunden ist und wobei die Steuereinheit (62) und die Antriebsvorrichtung (22) derart zusammenarbeiten, dass die Zapfwelle (56) trotz Drehzahlvariationen der Antriebswelle (15) mit einer im Wesentlichen unveränderten Drehzahl dreht.

9. Vorrichtung nach einem der Ansprüche 6 bis 8, **dadurch gekennzeichnet, dass** ein mit variabler Drehzahl betreibbarer und eine Antriebswelle (20) aufweisender Antriebsmotor (46) und ein Antriebsrad (34) vorgesehen ist, wobei das Antriebsrad (34) zur Drehung mit der Antriebswelle (20) des Antriebsmotors (46) verbunden ist und in eingreifender Verbindung mit dem Sonnenzahnrad (32) steht.

10. Vorrichtung nach einem der Ansprüche 6 bis 9, **dadurch gekennzeichnet, dass** ein zur Drehung mit dem Planetenradträger (24) verbundenes erstes Antriebsrad (40), eine eine Eingangswelle aufweisende und von dem ersten Antriebsrad (40) angetriebene Verstellpumpe (44), ein mit variabler Drehzahl betreibbar und von der Verstellpumpe hydraulisch angetriebener Konstant-Hydraulikmotor (46), der eine mit variabler Drehzahl betreibbaren Motorantriebswelle aufweist, und ein in eingreifender Verbindung mit dem Sonnenzahnrad (32) stehendes und zur Drehung mit der Antriebswelle (20) des Motors (46) verbundenes zweites Antriebsrad (34) vorgesehen ist.

## Claims

1. A device for transmitting drive power from a drive shaft (15) drivable by an internal combustion engine to a PTO shaft (56) for a tractor, with a transmission (10) and a drive device (22) operable at a variable speed of rotation, wherein the transmission (10) has first and second input interfaces (14, 20) and an output interface (18), wherein the first input interface (14) is connected to the drive shaft (15), the output interface (18) is connected to the PTO shaft (56), the output interface (18) has a speed of rotation which depends on the speeds of rotation of the first and second input interfaces (14, 20), and the drive device (22) is connected to the second input interface (20), **characterized in that** a speed of travel sensor (70) generating a speed of travel signal, a ratio value control unit (72) controlled by an operator and generating a ratio value signal and a control unit (62) are provided, wherein the control unit (62) is operatively connected to the drive device (22) and the control unit (62) receives the speed of travel signal and the ratio value signal and wherein the control unit (62) generates control signals which so vary the speed of rotation of the drive device (22) that a predetermined ratio value between a speed of travel and the speed of rotation of the output interface (18) is maintained.

2. Apparatus according to claim 1, **characterized in that** a control unit (62) is operatively connected to the drive device (22), **in that** the control unit (62) is so operated that the control unit (62) generates control signals which so vary the speed of rotation of the drive device (22) that the speed of rotation of the output interface (18) is substantially constant in spite of speed of rotation variations of the drive shaft (15).

3. Apparatus according to claim 1 or 2, **characterized in that** a speed of rotation sensor (64) is provided and measures the speed of rotation of the first input interface (14) and provides a speed of rotation signal to the control unit (20).

4. Apparatus according to any of the preceding claims, **characterized in that** the drive device (22) comprises a hydraulic pump (44) connected to be driven from the first input interface (14) and a hydraulic motor (46) driven by the hydraulic pump (44) and connected to the second input interface (20) of the transmission (10).

5. Apparatus according to claim 4, **characterized in that** the hydraulic pump (44) comprises a variable displacement pump and the hydraulic motor (46) comprises a constant displacement motor.

6. Apparatus according to any of the preceding claims, **characterized in that** the transmission (10) comprises a planet wheel carrier (24), planet gearwheels (26), an internal gear (36) and a sun gearwheel (30), wherein the planet wheel carrier (24) is connected to rotate with the drive shaft (15), the planet gearwheels (26) are rotatably arranged on the planet wheel carrier (24), the internal gear (36) is fixed to rotate with the output interface (18), the internal gear (36) is in mesh with the planet gearwheels (26) and the sun gearwheel (30) is in mesh with the planet gearwheels (26) and is connected to be driven by the drive device (22).

7. Apparatus according to any of the preceding claims, **characterized in that** there are provided a speed control unit (74) generating a predetermined speed of rotation signal, a speed of rotation sensor (76) generating a speed of rotation signal of the output interface (18) and a control unit (62), wherein the control unit (62) is operatively connected to the drive device (22), wherein the control unit (62) receives the predetermined speed of rotation signal and the speed of rotation signal of the output interface (18) and wherein the control unit (62) is so operated that the control unit (62) generates control signals which so vary the speed of rotation of the drive device (22) that the speed of rotation of the output interface (18) is maintained at a predetermined speed of rotation.

8. Apparatus according to claim 6 or 7, **characterized in that** there are provided a speed of rotation sensor generating a speed of rotation signal of the planet wheel carrier (24), a control unit (62) and a drive device (22) operable at a variable speed of rotation, wherein the control unit (62) is so operated that the control unit (62) receives the speed of rotation signal and generates a control signal in dependence thereon, wherein the drive device (22) receives the control signal and is connected to drive the sun gearwheel (32) and wherein the control unit (62) and the drive device (22) so cooperate that the PTO shaft (56) turns at a substantially unchanged speed of rotation in spite of variations in the speed of rotation of the drive shaft (15).

9. Apparatus according to any of claims 6 to 8, **characterized in that** there are provided a drive motor (46) operable at a variable speed of rotation and having a drive shaft (20), and a drive wheel (34), wherein the drive wheel (34) is connected to rotate with the drive shaft (20) of the drive motor (46) and is in mesh with the sun gearwheel (32).

10. Apparatus according to any of claims 6 to 9, **characterized in that** there are provided a first drive wheel (40) connected to turn with the planet wheel carrier (24), a variable displacement pump (44) having an input shaft and driven from the first drive wheel (40), a constant displacement hydraulic motor (46) operable at a variable speed of rotation and hydraulically driven by the variable displacement pump and having a motor drive shaft operable at a variable speed of rotation, and a second drive wheel (34) in mesh with the sun gearwheel (32) and connected to turn with the drive shaft (20) of the motor (46).

## Revendications

1. Dispositif pour la transmission de la force d'entraînement d'un arbre d'entraînement (15), pouvant être entraîné par un moteur à combustion interne, sur un arbre de prise de force (56) pour un tracteur, comportant un engrenage (10) et un dispositif d'entraînement (22) pouvant être actionné avec une vitesse de rotation variable, l'engrenage (10) comportant une première et une deuxième interface d'entrée (14, 20) et une interface de sortie (18), la première interface d'entrée (14) étant reliée à l'arbre d'entraînement (15), l'interface de sortie (18) étant reliée à l'arbre de prise de force (56), l'interface de sortie (18) ayant une vitesse de rotation qui dépend des vitesses de rotation de la première et de la deuxième interface d'entrée (14, 20), le dispositif d'entraînement (22) étant relié à la deuxième interface d'entrée (20), **caractérisé en ce qu'**il est prévu un capteur de vitesse de déplacement (70) générant un signal de vitesse de déplacement, une unité de commande de rapport (72) commandée par l'utilisateur et générant un signal de rapport, et une unité de commande (62), l'unité de commande (62) étant en liaison active avec le dispositif d'entraînement (22) et l'unité de commande (62) recevant le signal de vitesse de déplacement et le signal de rapport, et l'unité de commande (62) générant des signaux de commande qui font varier la vitesse de rotation du dispositif d'entraînement (22) de manière à conserver un rapport prédéfinissable entre une vitesse de déplacement et la vitesse de rotation de l'interface de sortie (18).

2. Dispositif selon la revendication 1, **caractérisé en ce qu'**une unité de commande (62) est en liaison active avec le dispositif d'entraînement (22), **en ce que** l'unité de commande (62) est activée de telle sorte que l'unité de commande (62) génère des signaux de commande qui font varier la vitesse de rotation du dispositif d'entraînement (22), de telle sorte que la vitesse de rotation de l'interface de sortie (18) est maintenue sensiblement constante malgré les variations de la vitesse de rotation de l'arbre d'entraînement (15).

3. Dispositif selon la revendication 1 ou 2, **caractérisé en ce qu'**il est prévu un capteur de vitesse de rotation (64), qui mesure la vitesse de rotation de la première interface d'entrée (14) et délivre un signal de vitesse de rotation de l'unité de commande (62).

4. Dispositif selon l'une quelconque des revendications précédentes, **caractérisé en ce que** le dispositif d'entraînement (22) comporte une pompe hydraulique (44), reliée en entraînement avec la première interface d'entrée (14), et un moteur hydraulique (46) actionné par la pompe hydraulique (44) et relié à la deuxième interface d'entrée (20) de l'engrenage (10).

5. Dispositif selon la revendication 4, **caractérisé en ce que** la pompe hydraulique (44) est une pompe à cylindrée variable et le moteur hydraulique (46) est un moteur à cylindrée constante.

6. Dispositif selon l'une quelconque des revendications précédentes, **caractérisé en ce que** l'engrenage (10) comporte un support de roues planétaires (24), des roues dentées planétaires (26), une couronne de train planétaire (36) et une roue dentée solaire (30), le support de roues planétaires (24) étant relié en rotation à l'arbre d'entraînement (15), les roues dentées planétaires (26) étant montées rotatives sur le support de roues planétaires (24), la couronne de train planétaire (36) étant fixée à l'interface de sortie (18) en vue de tourner, la couronne de train planétaire (36) engrenant avec les roues dentées planétaires (26) et la roue dentée solaire (30) engrenant avec les roues dentées planétaires (26) et étant en liaison d'entraînement avec le dispositif d'entraînement (22).

7. Dispositif selon l'une quelconque des revendications précédentes, **caractérisé en ce qu'**il est prévu une unité de commande de vitesse de rotation (74), générant un signal de vitesse de rotation prédéfini, un capteur de vitesse de rotation (76) de l'interface de sortie (18), générant un signal de vitesse de rotation de l'interface de sortie (18), et une unité de commande (62), l'unité de commande (62) étant en liaison active avec le dispositif d'entraînement (22), l'unité de commande (62) recevant le signal de vitesse de rotation prédéfini et le signal de vitesse de rotation de l'interface de sortie (18), et l'unité de commande (62) étant activée de telle sorte que l'unité de commande (62) génère des signaux de commande qui font varier la vitesse de rotation du dispositif d'entraînement (22) de manière à maintenir la vitesse de rotation de l'interface de sortie (18) à une vitesse de rotation prédéfinie.

8. Dispositif selon la revendication 6 ou 7, **caractérisé en ce qu'**il est prévu un capteur de vitesse de rotation générant un signal de vitesse de rotation du support de roues planétaires (24), une unité de commande (62) et un dispositif d'entraînement (22) pouvant être actionné avec une vitesse de rotation variable, l'unité de commande (62) étant activée de telle sorte que l'unité de commande (62) reçoit le signal de vitesse de rotation et génère un signal de commande dépendant de celui-ci, le dispositif d'entraînement (22) recevant le signal de commande et étant en liaison d'entraînement avec la roue dentée solaire (32), et l'unité de commande (62) et le dispositif d'entraînement (22) coopérant de telle sorte que l'arbre de prise de force (56) tourne avec une vitesse de rotation sensiblement inchangée malgré les variations de vitesse de rotation de l'arbre d'entraînement (15).

9. Dispositif selon l'une quelconque des revendications 6 à 8, **caractérisé en ce qu'**il est prévu un moteur d'entraînement (46) pouvant être actionné avec une vitesse de rotation variable et comportant un arbre d'entraînement (20), et une roue d'entraînement (34), la roue d'entraînement (34) étant reliée en rotation avec l'arbre d'entraînement (20) du moteur d'entraînement (46) et engrenant avec la roue dentée solaire (32).

10. Dispositif selon l'une quelconque des revendications 6 à 9, **caractérisé en ce qu'**il est prévu une première roue d'entraînement (40) reliée en rotation avec le support de roues planétaires (24), une pompe à cylindrée variable (44) comportant un arbre d'entrée et actionnée par la première roue d'entraînement (40), un moteur hydraulique (46) à cylindrée constante, qui peut être actionné avec une vitesse de rotation variable et est actionné par voie hydraulique par la pompe à cylindrée variable, et qui comporte un arbre d'entraînement du moteur pouvant être actionné avec une vitesse variable, et une deuxième roue d'entraînement (34) engrenant avec la roue dentée solaire (32) et étant reliée en rotation avec l'arbre d'entraînement (20) du moteur (46).
